# DEMANDE DE BREVET EUROPEEN

(11) **EP 0 661 377 A1**
(43) Date de publication de la demande: **05.07.1995**
(21) Numéro de dépôt: 94403004.8
(22) Date de dépôt: 23.12.1994
(51) Int. Cl.: C10L 10/02, F02B 47/00, F02B 51/00

(54) **Procédé pour empêcher les dépôts carbonés dans le circuit d'échappement d'un moteur turbocompressé**

(30) Priorité: 31.12.1993 FR 9315986
(71) Demandeur: RHONE-POULENC CHIMIE, 92408 Courbevoie Cédex (FR)
(72) Inventeur: Clamadieu, Jean-Pierre, F-75017 Paris (FR); Lemaire, Jacques, F-95520 Osny (FR)
(74) Mandataire: Ricalens, François

(57) **Abrégé**

La présente invention a pour objet un procédé nettoyage des moteurs turbocompressés.

Ce procédé se définit en ce que l'on alimente ledit moteur à combustion interne équipé d'un turbocompresseur au moyen d'un combustible contenant au moins un composé de terre(s) rares(s).

Application à l'amélioration du fonctionnement des moteurs à combution interne.

## Description

La présente invention a pour objet un procédé pour maintenir propre les circuits d'un moteur turbocompressé et pour réduire les rejets carbonés d'un tel moteur.

Elle concerne plus particulièrement l'utilisation de réactif à base de terres rares pour améliorer le fonctionnement des moteurs à combustion interne équipé d'un turbocompresseur.

Lors de la combustion des carburants et notamment celle du gazole dans le moteur diesel, les produits carbonés, ou hydrocarbonés, ont tendance à former dans leurs produits de combustion, des particules carbonées que l'on désignera dans la suite de la description sous l'expression de "suie(s)" qui sont réputées nocives tant pour l'environnement que pour la santé des mammifères supérieurs.

En outre ces suies souillent et encombrent les circuits du turbocompresseur. Cette accumulation des suies est susceptible de nuire au bon fonctionnement de l'ensemble moteur- turbocompresseur.

Depuis longtemps, on a recherché des techniques qui permettraient de réduire l'émission de ces suies. Cette recherche doit tenir compte de la contrainte d'éviter d'augmenter l'émission de monoxyde de carbone et/ou de gaz réputés toxiques et mutagènes tels que les oxydes d'azote.

De très nombreuses solutions ont été proposées pour réduire ces émissions carbonées. On s'oriente pour les moteurs dits atmosphériques vers une filtration des gaz d'échappement pour retenir les particules formées.

Il y a plusieurs lustres, dans un brevet français N°2 359 199, Il avait été proposé de réduire l'émission de particules dans des moteurs diesel très lents en ajoutant des acétylacétates de cérium, l'effet quoique décelable restait réduit. Plus récemment la demande de brevet européen n°0 194 369 proposait d'améliorer le système en ajoutant dans le carburant de l'oxygène sous forme de composés oxygénés. Même ainsi, pour les moteurs atmosphériques, la diminution de l'émission de suies reste très modérée. La baisse n'est que de 14 %!

Les évolutions techniques, économiques et législatives ont profondément modifié le problème. L'appel de plus en plus fréquent à des moteurs rapides de haute performance, l'utilisation de ces derniers à des puissances supérieures à la moitié de la puissance maximum, ainsi que le changement des combustibles utilisés pour les moteurs ont changé la nature du problème tout en le rendant encore plus difficile à résoudre. En effet l'utilisation à des richesses globales plus élevées d'un moteur conduit à des productions importantes de suies, cependant que l'utilisation de gazoles différents et plus raffinés conduisait à utiliser des produits qui tels les aromatiques sont réputés présenter une combustion très fuligineuse.

Ainsi pour obtenir un réduction élevée de la production de suies, s'oriente-t-on vers l'adaptation d'un filtre à particules sur les gaz d'échappement. Ce filtre doit être régénéré par combustion des suies.

Le problème posé par les moteurs turbocompressés se complique du fait que le circuit des gaz d'échappement peut s'encrasser en raison des suies produites au point d'en gêner le fonctionnement. Un tel problème ne peut se contenter d'une réduction de l'émission des suies de l'ordre de 10 %.

En outre, les moteurs à combustion interne, notamment diesels, équipés d'un "turbo" ne délivrent pratiquement pas de gaz d'échappement à la température adéquate pendant une durée suffisante pour une bonne combustion des particules prises isolément. En d'autres termes la température d'inflammation particulaire n'est pas atteinte.

Pour ce qui est des particules accrochées aux éléments du turbocompresseur elles sont pour la plupart à des températures assez faibles car elles sont en contact avec des parois en contact avec l'air extérieur, donc froides. En d'autres termes, si le temps de séjour est élevé, la température en revanche est très insuffisante pour que l'inflammation particulaire se déclenche, ce qui conduisait les spécialistes en la matière à considérer qu'aucune des techniques de combustion envisagées pour les moteurs diesels atmosphériques ne pouvaient être transposables sur les moteurs à combustion interne turbocompressés, notamment diesels.

Et cela, au point même qu'aucun essai n'avait été réalisé avant la présente invention.

C'est pourquoi un des buts de la présente invention est de fournir un procédé qui permette d'éviter l'accumulation des particules carbonées dans les circuits du turbocompresseur.

Un autre but de la présente invention est de fournir un procédé qui permette l'élimination des fines particules même lorsqu'il y a un turbo dans le moteur diesel.

Un autre but de la présente invention est de fournir un procédé qui permette d'oxyder les particules les plus fines et réduise la quantité de suies imbrûlées émises par le système.

Ces buts et d'autres qui apparaîtront par la suite sont atteints au moyen d'un procédé de traitement des moteurs à combustion interne équipé d'un turbocompresseur, procédé dans lequel on alimente ledit moteur à combustion interne équipé d'un turbocompresseur en composé contenant au moins une terre rare.

L'introduction de la terre rare peut notamment se faire soit par introduction directe dans la chambre de combustion, soit au moyen d'un combustible contenant au moins un composé de terre(s) rares(s), soit au moyen des deux voies. Ainsi l'on peut introduire la ou les terres(s) rares(s) d'une part par le biais d'un carburant en contenant et d'autre part le recyclage des suies porteuses de terres rares avec ou sans le gaz d'échappement qui les véhiculent.

En effet, de manière complètement imprévue, il a été montré que l'addition de cérium, ou de toute(s) autre(s) terre(s) rare(s), permettait d'éviter la majorité des dépôts carbonés (et leur accumulation) dans et sur les pièces du turbocompresseur, facilitant ainsi leur mise en oeuvre et leur marche. Contrairement à l'enseignement de l'art, la propreté du turbo reste remarquable même lorsque le moteur débite une fraction élevée du couple. Une fraction supérieure à la moitié, de préférence aux deux tiers de la charge maximale assurent une bonne propreté des circuits du turbocompresseur.

L'invention est particulièrement bien adaptée à des rotations de moteur supérieure à 1000 tours par minute, avantageusement à 1250 tours par minute, de préférence 1800 tours par minute.

Selon la présente invention, il n'est pas indispensable que les valeurs de puissance ou de rotation soient atteinte tout le temps. Il est toutefois préférable que de temps en temps l'une d'entre elles soit atteinte. A titre indicatif, il est bon que cette ou ces valeurs soi(en)t atteintes pendant au moins 5% avantageusement 10 % de préférence 20 % du temps de fonctionnement.

Ainsi, de manière complètement inattendue, lorsque l'on alimente un moteur turbocompressé avec un carburant additionné de composé à base de terre(s) rare(s) les conditions qui règnent dans le turbo d'un moteur diesel sont telles que l'on obtienne une combustion des particules carbonées qui, en général, souillent la ligne d'échappement des moteurs dits "turbocompressés".

Lorsque le moteur à combustion interne est un moteur diesel équipé d'un turbocompresseur, les résultats sont particulièrement probants cependant que la marche du moteur en est considérablement améliorée.

A ce jour la demanderesse n'est pas capable de fournir une explication sure de ce phénomène.

Les terres rares préférées sont les cérium, le néodyme et le lanthane et leurs mélanges.

Toutefois, à ce jour, les meilleurs résultats sont ceux obtenus au moyen de cérium.

Dans leur fonction catalytique après la sortie du moteur, ces métaux sont, de préférence, sous la forme de leur oxyde, de cérium IV dans le cas du cérium, trivalent dans les autres cas.

Il est possible d'utiliser des mélanges de terre rare mais, dans ce cas, il est préférable que le cérium et/ou le lanthane soient majoritaires.

En général, les terres rares sont introduites dans les suies par l'addition dans le carburant de dérivé(s) tel(s) que leurs sels ou de leurs sols.

Il convient toutefois de souligner que la forme sous laquelle est introduite la, ou les, terre(s) rare(s) dans le combustible, n'est pas sans effet sur la taille des cristallites et agrégats qui se trouvent dans la suie, taille qui joue un rôle dans la capacité catalytique des terres rares présente au sein des suies (cf. Demande de brevet français N° 92/14158 déposé le 25.11.1992 et intitulé "agrégat de cristallites d'oxyde cérique, procédé d'obtention et son utilisation pour réduire les résidus de combustion").

Par ailleurs, lorsque l'on choisit cet élément comme catalyseur, la durée de vie de certains composés et notamment de sels de cérium III en milieu organique est souvent faible et peut être cause de mauvais résultats dans l'effet catalytique. Aussi quand on désire utiliser le cérium il est préférable d'utiliser soit les sols, soit les sels objet de la demande de brevet Européenne déposée sous le N°93/304760.7 et publiée sous le N°0575189.Une autre solution réside dans l'addition extemporanée des produits peu stables dans le réservoir de gazole ou d'ajouter des stabilisants desdits composés.

Avantageusement on détermine la quantité de terres rares introduite dans le moteur de manière que la teneur en terre(s) rare(s) (en masse de métal contenu) dans les suies atteigne un niveau compris entre 1000 ppm et 30 % avantageusement au moins 5000 ppm de préférence au moins 5% et avantageusement au plus 25%, de préférence au plus 10%. En moyenne pendant un cycle européen, une valeur satisfaisante est de l'ordre de 5 à 10 %.

Pour être efficace, il convient d'ajuster l'addition de terre(s) rare(s) selon les caractéristiques du carburant utilisé de manière à obtenir les teneurs en terre(s) rare(s) dans les suies ci-dessus. L'addition en terre(s) rare(s) (masse de métal contenu) correspond en général à au moins 20 ppm par rapport au combustible carboné (par exemple gazole), de préférence à au moins 50 ppm plus avantageusement à au moins 100 ppm. Lorsque l'addition se fait via le carburant ces valeurs correspondent à la teneur du carburant en terre(s) rare(s).

Il est préférable que la teneur en terre rare dans le combustible ne dépasse pas 500 ppm pour des raisons de coût.

Il est préférable que l'oxyde de cérium ainsi formé présente une granulométrie telle que le d₈₀ soit au plus égal à 10.000 Ä (1.000 nanomètres), de préférence à 5.000 Ä (500 nanomètres).

Il est également préférable que le d₂₀ soit supérieur à 200 Ä (20 nanométres) et de préférence 500 Ä (50 nanométres).

Ainsi selon la présente invention, on a mis au point une nouvelle utilisation de composition à base de terre(s) rare(s).

La présente invention peut être utilisée aussi bien avec un filtre en aval du turbocompresseur que sans filtre.

L'invention est particulièrement bien adaptée aux moteurs Diesel rapides (par opposition au moteurs lents), ces moteurs sont pour l'essentiel utilisés dans les transports terrestres, tels que poids lourds (camions, autocar, etc.), et véhicules légers. Par moteur diesel rapide on entend des moteurs dont la puissance maximale est atteinte à des vitesses de rotation au moins égale à 1500 tours/minute; avantageusement au moins égale à 1800 tours/minute.

Les meilleurs résultats sont obtenus avec des gazoles dont 95 % en masse des constituants distillent sous pression atmosphérique à une température au moins égale à 160°C avantageusement à 180°C et dont 95 % en masse des constituants sont volatils sous pression atmosphérique à 400°C de préférence à 360°C.

Le procédé donne de bon résultats avec les gazoles à teneur élevée en aromatique, qu'avec les gazoles à teneur élevée en aliphatique avec la condition que les contraintes de distillation exposées ci-dessus soient observées.
Le plus souvent les compositions sont des composés de terre(s) rare(s) liquides dans les conditions d'utilisation (notamment température ambiante au moteur), sous forme de sol(s), ou dissous, dans des diluants hydrocarbonés, notamment les combustibles, y compris les gazoles.
Ainsi La présente invention est particulièrement intéressante pour deux sortes de carburant ceux dont la teneur en aromatique est très élevée [teneur en dérivé(s) aromatique(s) est au moins égal à 1/5 avantageusement à un tiers], car elle permet de d'utiliser ces carburants qui sans cette invention conduirait à des dépôts par trop perturbants.
Par ailleurs c'est sur les carburants (c'est-à-dire lesdits mélanges) dits paraffiniques dont la teneur en paraffine est au moins égale à 30 % que les effets sont les plus nets. Ces carburants sont étudiés en vue de répondre à de nouvelles normes plus contraignantes. Il est souhaitable que pour ce type de composition, la teneur en aromatiques (en masse) soit au plus égale à 1/5 avantageusement à 1/10, de préférence à 1/20.
Les exemples non limitatifs suivants illustrent l'invention.

### EXEMPLES

Deux moteurs on été testés.
Moteurs utilisés:
Moteurs Cummins à spécifications suivantes
1. Spécifications du moteur

| | | |
|---|---|---|
| Cylindrée | 1 | 8.3 |
| Nombre de cylindres | - | 6 en ligne |
| Régime de puissance maxi. | tr/min | 2200 |
| Puissance maxi. | kW (hp) | 209 (280) |
| Régime de couple maxi. | tr/min | 1300 |
| Couple maxi. | Nm (lb-ft) | 1060 (780) |
| Pression Moyenne effective maxi. | bar | 16 |
| Suralimentation | turbocompresseur | |

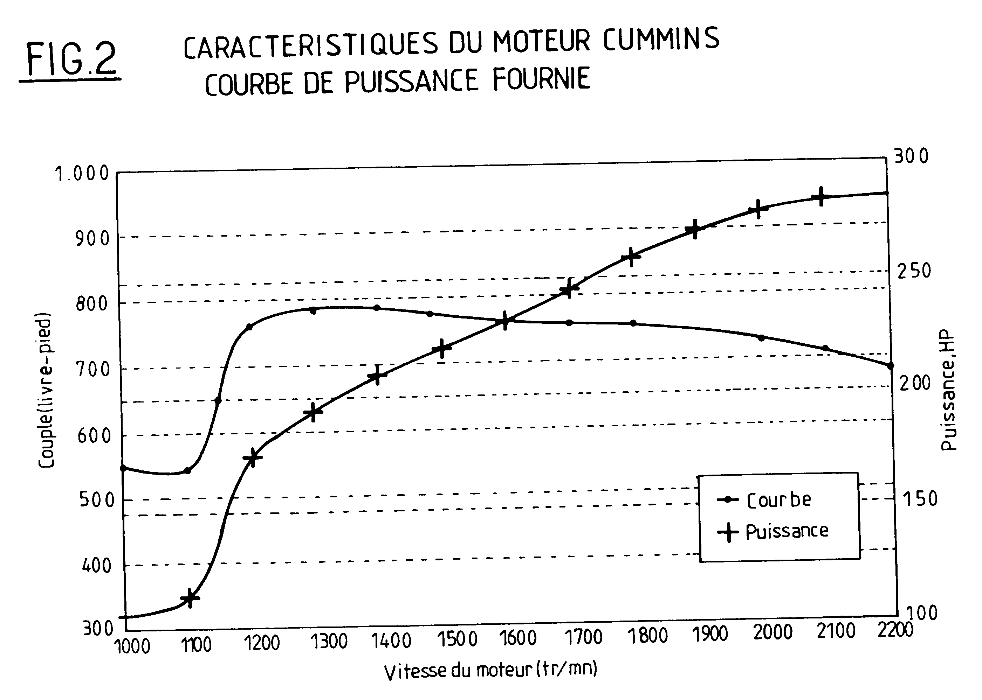

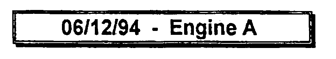

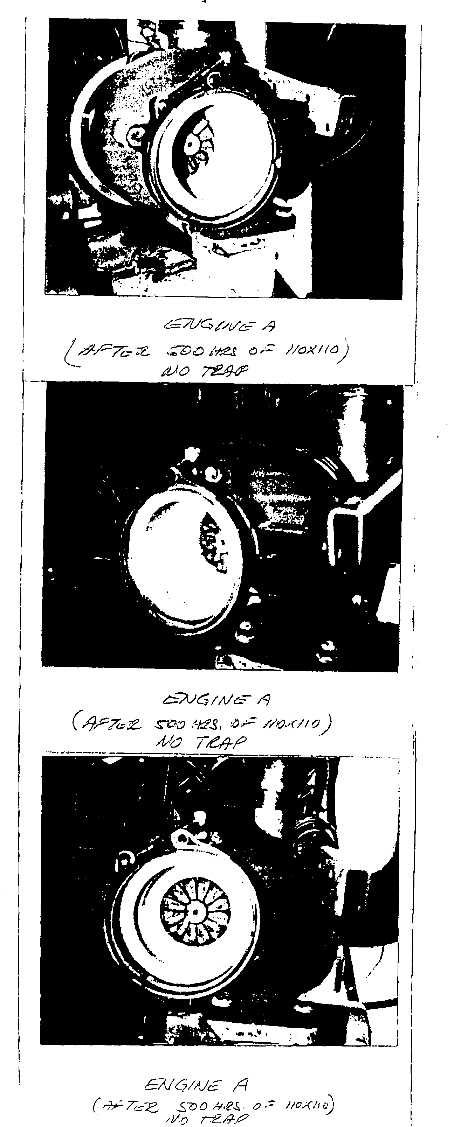

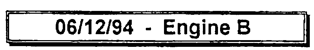

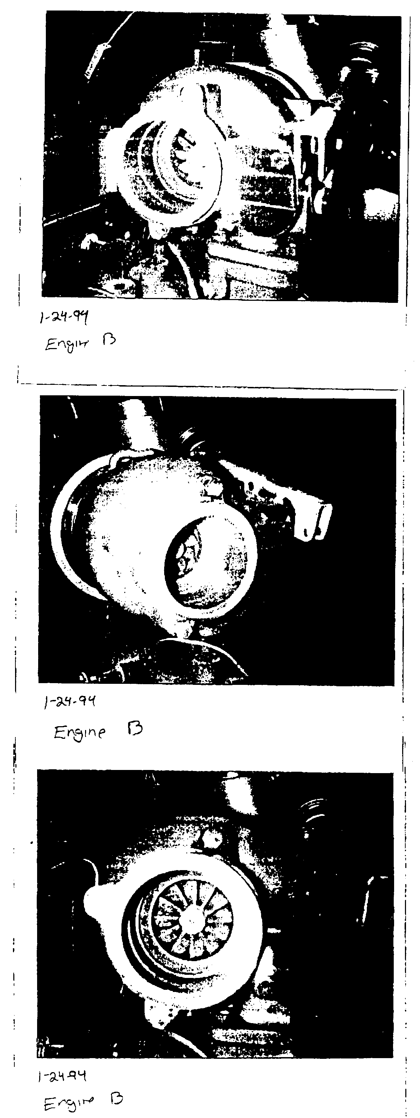

les courbes de couple/puissance sont jointes (figure 2)
2. Conditions de fonctionnement moteur "A"
. 1000 h de fonctionnement à 110 % de la pleine charge nominale et 110 % du régime maxi nominal avec (C₈H₁₆O₂)₂ (C₈H₁₅O₂)₂ CeO (100 ppm Ce dans le gazole).
. Température d'échappement d'environ 520° C.
. pas de filtre à particules sur la ligne d'échappement,
. analyse de 2 échantillons du gazole utilisé jointe en annexe.

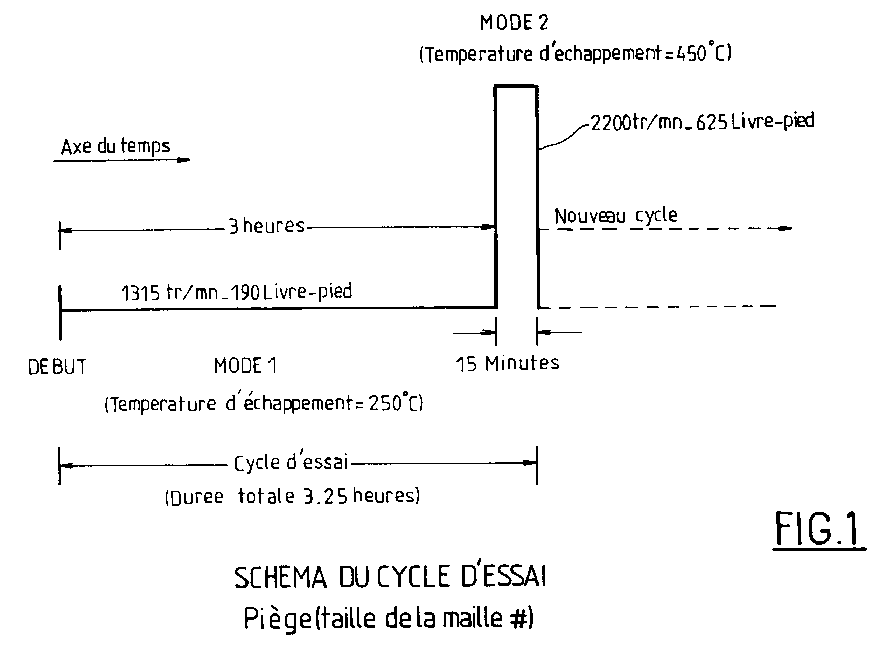

3. Conditions de fonctionnement moteur "B"
2000 h de fonctionnement avec filtre à particules et (C₈H₁₆O₂)₂ (C₈H₁₅O₂)₂ CeO dont:
. 500 h à 110 % de la pleine charge nominale et 110 % du régime maxi nominal (100 ppm Ce dans le gazole). Température d'échappement comprise entre 535 et 650° C selon la contrepression due au filtre.
. 280 h suivant le cycle à 2 modes joint en annexe (figure 1) avec 100 ppm.
. 120 h à 1310 tr/min. - 190 lb-ft. avec 100 ppm. Température d'échappement comprise entre 260 et 320° C selon la contrepression due au fitre.
. 270 h à 1310 tr/min - 190 lb-ft avec 25 ppm. Température d'échappement comprise entre 260 et 340° C selon la contrepression due au filtre.
. 830 h à 1310 tr/min. - 190 lb-ft avec 10 ppm. Température d'échappement comprise entre 260 et 340° C selon la contrepression due au filtre.

Dans les deux cas, ainsi que le montrent les photographies moteiur A et moteur B, le dépôt est blanc et non noir comme dans le cas où il n'y a pas de terres rares selon l'invention. Le contraste est très net avec l'important dépôt de suies noires usuel.

Pendant le test A deux gazoles on été testés à savoir ceux dont l'analyse suit:

| Test | EM-1649 F | EM-1649A-F |
|---|---|---|
| Soufre par fluorescence X (XRF par ASTM D 4294) | 0,039 | 0,039 |
| poids % | | |
| **Distillation, D86,°F** | 379 | 369 |
| point d'ébullition initial (IBP: Initial Boiling point) | | |
| 10% | 442 | 435 |
| 50% | 511 | 511 |
| 90% | 599 | 599 |
| point d'ébullition final (FBP Final Boiling point) | 644 | 642 |
| Densité (American Petroleum Institute gravity) ASTM D4052 | 34.39 | 34.17 |
| Teneur en aromatique (en % massique) ASTM D5186: | 34.22 | 32.54 |

## Revendications

1. Procédé pour maintenir propre les circuits d'un moteur diesel turbocompressé caractérisé par le fait que l'on alimente ledit moteur à combustion interne équipé d'un turbocompresseur au moyen d'un combustible contenant au moins un composé de terre(s) rares(s).

2. Procédé selon la revendication 1, caractérisé par le fait que la teneur en terre(s) rare(s) est d'au moins 10 ppm par rapport au combustible carboné, avantageusement 20 ppm, de préférence 50 ppm (en masse).

3. Procédé selon les revendications 1 et 2, caractérisé par le fait que la teneur en terre rare ne dépasse pas 500 ppm .

4. Procédé selon les revendications 1 à 3, caractérisé par le fait que le moteur diesel présente sa puissance maximale à une vitesse de rotation supérieure à 1500 tours/minute.

5. Utilisation de composition à base de terre(s) rare(s) pour maintenir propre les circuits du turbocompresseur pour où passe les gaz d'echappement.

6. Utilisation selon la revendication 5, caractérisé par le fait que la composition est choisie parmi les composés de terre(s) rare(s) liquides dans les conditions d'utilisation.
